# EUROPÄISCHE PATENTANMELDUNG

(11) **EP 4 451 056 A1**
(43) Veröffentlichungstag der Anmeldung: **23.10.2024**
(21) Anmeldenummer: 23169175.9
(22) Anmeldetag: 21.04.2023
(51) Int. Cl.: G03B 15/07, G03B 15/08

(54) **VORRICHTUNG ZUR ERSTELLUNG VON PRODUKTFOTOGRAFIEN**

(71) Anmelder: Lightsphere UG (haftungsbeschränkt), 71034 Böblingen (DE)
(72) Erfinder:
(74) Vertreter: Meyer zu Bexten, Elmar

(57) **Zusammenfassung**

Verfahren und Vorrichtung zur Erzeugung freigestellter Bilder eines Objekts, wobei das Objekt mittels Langzeitbelichtung fotografiert wird, während eine Beleuchtungseinheit im Hintergrund des Bildes bewegt wird und diesen Hintergrund überstrahlt

## Beschreibung

### Technisches Gebiet

Die Erfindung bezieht sich auf die Vorrichtung und das Verfahren gemäß dem ersten Teil der unabhängigen Ansprüche.

### Stand der Technik

Zur Erzeugung freigestellter Bilder von Objekten, insbesondere Produkten wie KFZ, werden diese Objekte vor einem einfarbigen, insbesondere weißen, Hintergrund platziert. Zur Erzeugung von 360° Aufnahmen muss dieser Hintergrund das Objekt komplett umschließen, dazu bedarf es aufwändiger Konstruktionen wie etwa Fotoräume oder -zelte mit weißen Wänden, die teilweise fest installiert werden müssen. Alternativ wird der Hintergrund nach Erzeugung der Bilder mittels Bildbearbeitungssoftware entfernt, was, abhängig von Hintergrund und Objekt, ebenfalls einen erheblichen Aufwand an Zeit und Geld bedeutet. Es ist möglich mittels Techniken der Fotografie, wie der Langzeitbelichtung, insbesondere Light-Painting, störende Bildinhalten während der Aufnahmen des Bildes zu überstrahlen und so weiß erscheinen zu lassen.

### Kurzbeschreibung der Erfindung

Die Erfindung umfasst eine Beleuchtungseinheit, die um das Objekt rotiert wird bzw. einen Drehteller, der das Objekt vor der Beleuchtungseinheit rotiert, sowie Kameras die innerhalb, außerhalb oder auf einer Rotationsbahn der Beleuchtungseinheit angeordnet sind.

### Technische Aufgabe

Aufgabe der Erfindung ist es ein digitales Abbild des Objekts zu erzeugen, ohne, dass ein Konstruktionsaufwand für einen weißen Raum oder Zelt betrieben werden muss und ohne, dass im Nachgang ein Hintergrund mittels Bildbearbeitungssoftware entfernt werden muss. Es muss sichergestellt werden, dass das Objekt gleichmäßig ausgeleuchtet wird. Überbelichtete stellen im Bild müssen vermieden werden.

### Technische Lösung

Die Erfindung ist in den beigefügten Ansprüchen beschrieben.

### Kurze Beschreibung der Zeichnungsfiguren

Figur 1 zeigt einen Aufbau der erfindungsgemäßen Vorrichtung mit dem Objekt vor einem Hintergrund und Bewegungsbahn der Beleuchtungseinheit
Figur 2 zeigt die resultierende Erscheinung des Objektes vor weißem Hintergrund
Figur 3 zeigt eine Ausgestaltungsform mit an der Decke montiertem Drehpunkt
Figur 4 zeigt eine kleine Ausführungsform der Erfindung für Schmuck und ähnliche kleine Objekte

### Beschreibung der Ausführungsarten

Die Erfindung basiert auf dem Prinzip des "Light-Painting", dabei wird ein Objekt mit einer langen Belichtungszeit fotografiert. Während der langen Belichtungszeit werden Bereiche des Bildes mit einer Beleuchtungseinheit ausgeleuchtet oder überstrahlt. Erzeugt die Beleuchtungseinheit ein weißes Licht, so erscheinen die überstrahlten Bereiche später weiß.

Die hier beschriebene Erfindung schafft eine Vorrichtung und ein Verfahren zur Erzeugung digitaler Abbildungen von Objekten vor einem freigestellten Hintergrund.

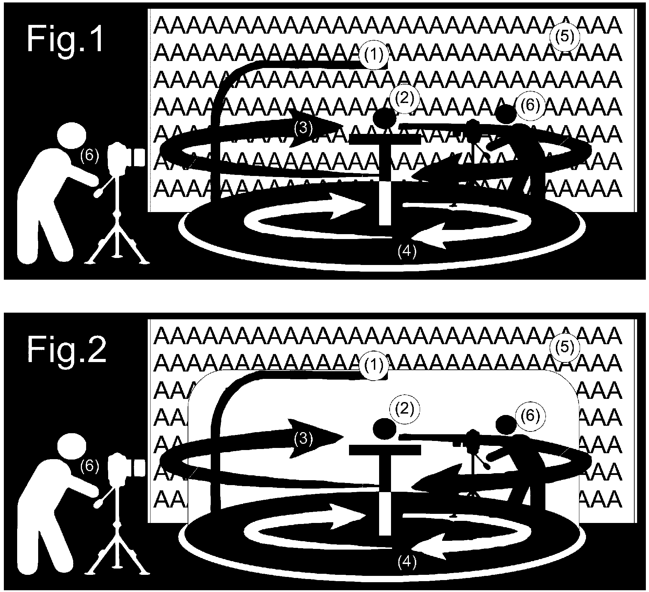

Die Vorrichtung besteht aus einer in Figur 1 gezeigten Beleuchtungseinheit (1), insbesondere Led-Streifen, Leuchtröhren oder Stableuchten, die auf einer Kreisbahn (3) um das Objekt (2) geführt wird.

Die Beleuchtungseinheit ist dazu auf einem Drehteller (4) befestigt oder läuft auf einer Kreis- oder Teilkreisförmigen Schiene um das Objekt (2).

Außerdem ist es möglich, die Beleuchtungseinheit (1) auf einem selbstfahrenden Gerät, insbesondere einer Drohne oder einem ferngesteuerten Fahrzeug (nicht gezeigt) zu montieren, welches die Kreisbahn (3) abfährt.

In einer weiteren Ausführungsform hängt die Beleuchtungseinheit (1) von einem unbemannten Flugobjekt (nicht gezeigt) welches eine Kreisbahn (3) um das Objekt (2) fliegt.

Wird die Beleuchtungseinheit auf einer Drohne oder anderem Gefährt montiert, welches nicht Schienengebunden ist, ist es möglich die Beleuchtungseinheit auf, von der Kreisbahn abweichenden, Bahnen zu bewegen, beispielsweise in einer Eben hinter dem Objekt oder auf einer freien Bahn zwischen zwei, eng aneinander stehenden, Objekten.

Eine Kamera (6), die innerhalb, außerhalb oder auf der Kreisbahn (3) liegt, ist auf das Objekt (2) ausgerichtet und fotografiert es mit einer langen Belichtungszeit, während die Beleuchtungseinheit (1) auf der Kreisbahn (3) zwischen dem Objekt (2) und einem Hintergrund (5) entlangfährt.

Während der Belichtungszeit fährt die Beleuchtungseinheit die Kreisbahn ab, dabei überstrahlt sie einen Hintergrund (5) und beleuchtet gleichzeitig das Objekt (2)

Alternativ ist die Beleuchtungseinheit (2) ortsfest und das Objekt (2) dreht sich gemeinsam mit der Kamera (6) vor der Beleuchtungseinheit (1), wodurch eine ähnliche Relativbewegung zwischen Kamera (6), Objekt (2) und Beleuchtungseinheit (1) entsteht

Durch das Wegfallen eines baulichen Aufwands zur Errichtung eines Zeltes oder eines weißen Raumes ist es möglich Objekte jeglicher Größe freigestellt abzulichten. So ist es denkbar einen LKW mit Anhänger oder ein Haus von der Beleuchtungseinheit umfahren oder umfliegen zu lassen.

Des Weiteren ist es möglich die Kamera (6) in dem Objekt (2), insbesondere in einem Fahrzeug, anzuordnen und Aufnahmen eines Innenraums des Fahrzeugs zu erzeugen, wobei ein, durch die Scheiben des Fahrzeugs sichtbarer, Hintergrund (5) weiß überstrahlt wird.

Figur 2 zeigt ein Ergebnis des Verfahrens, bei dem der Hintergrund (5) durch die Bewegung der Beleuchtungseinheit (1) überstrahlt wurde und somit weiß erscheint.

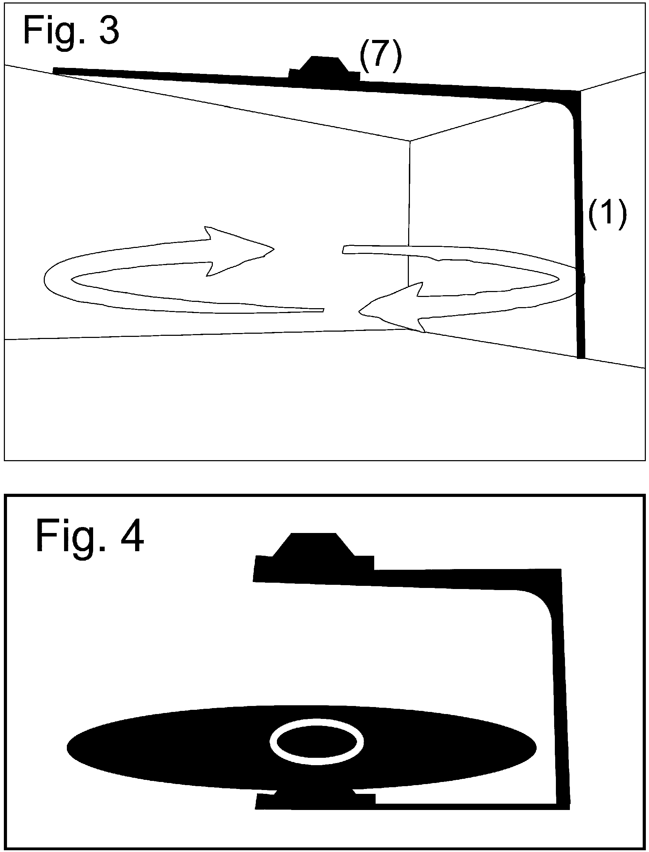

Figur 3 zeigt eine weitere Ausgestaltungsform, bei der ein Drehpunkt der Beleuchtungseinheit (1) über eine Aufhängung (7) an einer Raumdecke befestigt ist.

Alternativ kann die Beleuchtungseinheit (1) auch an Decke und Boden befestigt werden (nicht gezeigt)

Speziell für kleine Objekte, wie Schmuck, Schuhe, Flaschen oder Kleidung, aber nicht beschränkt darauf, macht es Sinn die Beleuchtungseinheit wie in Figur 4 gezeigt an Decke und Boden zu montieren und das Objekt auch unterhalb seines Auflagepunkts freizustellen um einen "freischwebenden" Effekt zu erlangen

Ein Vorteil der Erfindung ist eine freie Skalierbarkeit ihrer Größe, so ist es möglich, eine sehr kleine Beleuchtungseinheit für kleine Objekte und Makroaufnahmen, z.B. für Handschmuck, oder eine sehr große Beleuchtungseinheit für LKW, Häuser oder Schiffe anzufertigen, die alle nach dem gleichen Prinzip funktionieren.

Durch die Vorrichtung und das Verfahren ist es möglich 360° Aufnahmen eines Objekts anzufertigen.

Es ist möglich eine Ausleuchtung des Objekts durch eine Bewegungsgeschwindigkeit der Beleuchtungseinheit zu steuern, so erzeugt eine gleichmäßige Bewegung eine gleichmäßige Ausleuchtung

### Patentdokumente

WO0208879A2
WO03077095A1
WO2018106887A1
WO2020210790A1

## Patentansprüche

1. Vorrichtung zur Erzeugung digitaler, freigestellter Bilder von Objekten, insbesondere Produkte, Fahrzeuge oder Häuser, bestehend aus einer Beleuchtungseinheit und einer Kamera, **gekennzeichnet dadurch, dass** die Beleuchtungseinheit auf einer Kreisbahn um das Objekt beweglich gelagert ist.

2. Vorrichtung nach Anspruch 1, **gekennzeichnet dadurch, dass** die Kamera innerhalb, außerhalb oder auf der Kreisbahn angeordnet ist.

3. Vorrichtung nach Anspruch 1, **gekennzeichnet dadurch, dass** die Kamera im Objekt, insbesondere Fahrzeug, angeordnet ist.

4. Verfahren zur Erzeugung digitaler, freigestellter Bilder mit einer Vorrichtung nach einem der Vorangehenden Ansprüche, **gekennzeichnet dadurch, dass** die Beleuchtungseinheit um ein, im Mittelpunk der Kreisbahn befindliches, Objekt rotiert wird.

5. Verfahren zur Erzeugung digitaler, freigestellter Bilder mit einer Vorrichtung nach Anspruch 1-3, **gekennzeichnet dadurch, dass** die Beleuchtungseinheit ortsfest ist und das Objekt und die Kamera sich vor der Beleuchtungseinheit drehen

6. Verfahren nach einem der vorangehenden Ansprüche, **dadurch gekennzeichnet, dass** die Kamera das Objekt mittels Langzeitbelichtung erfasst.

7. Verfahren nach Anspruch 4-6, **gekennzeichnet dadurch, dass** die Beleuchtungseinheit einen Hintergrund hinter dem Objekt bzw. um das Objekt herum überstrahlt.

8. Verfahren nach Anspruch 4-7, **gekennzeichnet dadurch, dass** die Beleuchtungseinheit das Objekt beleuchtet.

9. Verfahren nach einem der vorangehenden Ansprüche, **gekennzeichnet dadurch, dass** eine 360° Abbildung des Objekts erzeugt wird

10. Verfahren nach einem der vorangehenden Ansprüche, **gekennzeichnet dadurch, dass** die Beleuchtungseinheit mittels eines unbemannten Fahr- oder Flugobjekts auf der Kreisbahn um das Objekt bewegt wird

11. Verfahren nach einem der vorangehenden Ansprüche, **gekennzeichnet dadurch, dass** die Beleuchtungseinheit auf einer Schiene geführt wird.

12. Verfahren nach einem der vorangehenden Ansprüche, **gekennzeichnet dadurch, dass** die Beleuchtungseinheit auf einem ferngesteuerten Fahrzeug angebracht ist.

## Geänderte Patentansprüche

### Geänderte Patentansprüche gemäss Regel 137(2) EPÜ.

1. Vorrichtung zur Erzeugung digitaler, freigestellter Bilder von Objekten, insbesondere Produkte, Fahrzeuge oder Häuser, bestehend aus einer Kamera und einer Beleuchtungseinheit, die auf einer Kreisbahn um das Objekt beweglich gelagert ist, **dadurch gekennzeichnet, dass** die Kamera das Objekt mittels Langzeitbelichtung erfasst und die Beleuchtungseinheit die Kreisbahn abfährt, wobei sie einen Hintergrund hinter dem Objekt bzw. um das Objekt herum überstrahlt, um den Hintergrund weiß erscheinen zu lassen.

2. Vorrichtung nach Anspruch 1, **gekennzeichnet dadurch, dass** die Kamera innerhalb, außerhalb oder auf der Kreisbahn angeordnet ist.

3. Vorrichtung nach Anspruch 1, **gekennzeichnet dadurch, dass** die Kamera im Objekt, insbesondere Fahrzeug, angeordnet ist.

4. Verfahren zur Erzeugung digitaler, freigestellter Bilder mit einer Vorrichtung nach einem der Vorangehenden Ansprüche, wobei die Beleuchtungseinheit um ein, im Mittelpunk der Kreisbahn befindliches, Objekt rotiert wird, **dadurch gekennzeichnet, dass** die Kamera das Objekt mittels Langzeitbelichtung erfasst und die Beleuchtungseinheit die Kreisbahn abfährt, wobei sie einen Hintergrund hinter dem Objekt bzw. um das Objekt herum überstrahlt, um den Hintergrund weiß erscheinen zu lassen.

5. Verfahren zur Erzeugung digitaler, freigestellter Bilder mit einer Beleuchtungseinheit und einer Kamera, wobei ein Objekt gedreht wird, **gekennzeichnet dadurch, dass** die Beleuchtungseinheit ortsfest ist und das Objekt und die Kamera sich vor der Beleuchtungseinheit drehen, während die Kamera das Objekt mittels Langzeitbelichtung erfasst, wobei die Beleuchtungseinheit einen Hintergrund hinter dem Objekt bzw. um das Objekt herum überstrahlt, um den Hintergrund weiß erscheinen zu lassen.

6. Verfahren nach Anspruch 4 oder 5, **gekennzeichnet dadurch, dass** die Beleuchtungseinheit das Objekt beleuchtet.

7. Verfahren nach einem der vorangehenden Ansprüche, **gekennzeichnet dadurch, dass** eine 360° Abbildung des Objekts erzeugt wird

8. Verfahren nach einem der vorangehenden Ansprüche, **gekennzeichnet dadurch, dass** die Beleuchtungseinheit mittels eines unbemannten Fahr- oder Flugobjekts auf der Kreisbahn um das Objekt bewegt wird

9. Verfahren nach einem der vorangehenden Ansprüche, **gekennzeichnet dadurch, dass** die Beleuchtungseinheit auf einer Schiene geführt wird.

10. Verfahren nach einem der vorangehenden Ansprüche, **gekennzeichnet dadurch, dass** die Beleuchtungseinheit auf einem ferngesteuerten Fahrzeug angebracht ist.
